# EUROPEAN PATENT APPLICATION

(11) **EP 4 583 443 A1**
(43) Date of publication of application: **09.07.2025**
(21) Application number: 23854314.4
(22) Date of filing: 10.08.2023
(51) Int. Cl.: H04L 5/00

(54) **METHOD USED IN NODE FOR WIRELESS COMMUNICATION, AND APPARATUS**

(30) Priority: 13.08.2022 CN 202210970677
(71) Applicant: SHANGHAI LANGBO COMMUNICATION TECHNOLOGY COMPANY LIMITED, Shanghai 200240 (CN)
(72) Inventor: WU, Lu, Shanghai 201206 (CN); SONG, Shulin, Shanghai 201206 (CN); ZHANG, Xiaobo, Shanghai 201206 (CN)
(74) Representative: Laqua, Bernd Christian Kurt
(86) International application number: PCT/CN2023/112233
(87) International publication number: WO 2024/037412

(57) **Abstract**

The present application discloses a method used in a node for wireless communication, and an apparatus. A first node receives a first CSI reporting configuration; receives a first signaling; and sends a first CSI. The first CSI comprises a first resource indicator and a first report quantity; the value of the first resource indicator is one of N resource indicator values; the first CSI reporting configuration comprises a first resource configuration, the first resource configuration is used to configure the N RS resources, the N RS resources respectively correspond to the N resource indicator values, the first RS resource corresponds to the value of the first resource indicator, and the first RS resource is one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

## Description

### Technical Field

The present application relates to transmission methods and apparatus in wireless communication systems, in particular to transmission methods and apparatus of wireless signals in wireless communication systems that support cellular networks.

### Background Technology

In the future, the application scenarios of wireless communication systems will become more diverse, and the different application scenarios impose different performance requirements on the system. In order to meet the different performance needs of a variety of application scenarios, it was decided to conduct a study on new radio (NR) (or 5G) technology at the 3GPP (3rd Generation Partner Project) RAN (Radio Access Network) #72 plenary meeting. At the 3GPP RAN #75 plenary meeting, the WI (Work Item) of the new radio (NR) technology was passed to begin the standardization work on NR.

Currently, research work has been started on R18 version of 5G NR, and network energy saving is one of the SIs (Study Item), of which the adaptation of a spatial element of a base station (for example, an antenna element, an antenna panel, an antenna port, a logical antenna port, a transmit radio unit (TxRU), a transmission reception point (TRxP), etc.) is a research direction for energy saving.

### Summary of Invention

The inventors have found, through research, that in wireless communication systems, the reporting of CSI (Channel State Information) is a key issue.

The present application discloses a solution to the above problems. It should be noted that in the description of the present application, the up-down link is only a typical application scenario; the present application is also applicable to other scenarios facing similar problems (such as sidelink and vehicle networking) and similar technical effects can be achieved. In addition, adoption of a unified solution across different scenarios (including, but not limited to, multi-carrier scenarios) can also help reduce hardware complexity and costs. Without conflicting, the embodiments and features in the embodiments of the first node device of the present application may be applied to the second node device and vice versa. In particular, the interpretation of terminology, nouns, functions, variables (if not otherwise specified) in the present application may refer to the definitions in the specification protocol TS36 series, TS37 series, and TS38 series of 3GPP.

As an embodiment, the interpretation of terminology in the present application is the definition of a specification protocol TS36 series, referring to 3GPP.

As an embodiment, the interpretation of terminology in the present application is the definition of a specification protocol TS38 series, referring to 3GPP.

As an embodiment, the interpretation of terminology in the present application is the definition of a specification protocol TS37 series, referring to 3GPP.

As an embodiment, the interpretation of terminology in the present application refers to the definitions in the specifications protocol of IEEE (Institute of Electrical and Electronics Engineers).

The present application discloses a method used in a first node for wireless communication, comprising:
receiving a first CSI reporting configuration; receiving a first signaling;
sending a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As an embodiment, issues to be addressed by the present application include: calculation of CSI report quantity.

According to one aspect of the present application, when and only when the first RS resource is not associated with the first index set, the calculation of the first report quantity is conditioned on the first RS resource.

According to one aspect of the present application, when the first RS resource is associated with the first index set, the value of the first report quantity is default.

According to one aspect of the present application, when the first RS resource is associated with the first index set, the calculation of the first report quantity is conditioned on a second RS resource; the second RS resource corresponds to the value of the first resource indicator.

According to one aspect of the present application, the first CSI reporting configuration is used to configure two RS resource sets for channel measurement, the first and second RS resources belonging to the two RS resource sets for channel measurement, respectively.

According to one aspect of the present application, the second RS resource and the first RS resource belong to an RS resource corresponding to the same RS resource index, and the quasi co-location information of the second RS resource is different from the quasi co-location information of the first RS resource.

According to one aspect of the present application, the quasi co-location information of the first RS resource and the quasi co-location information of the second RS resource belong to configuration information of the first RS resource; or alternatively, the quasi co-location information of the second RS resource relies on the first index set.

The present application discloses a method used in a second node for wireless communication, comprising:
sending a first CSI reporting configuration; receive a first signaling;
receiving a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

According to one aspect of the present application, when and only when the first RS resource is not associated with the first index set, the calculation of the first report quantity is conditioned on the first RS resource.

According to one aspect of the present application, when the first RS resource is associated with the first index set, the value of the first report quantity is default.

According to one aspect of the present application, when the first RS resource is associated with the first index set, the calculation of the first report quantity is conditioned on a second RS resource; the second RS resource corresponds to the value of the first resource indicator.

According to one aspect of the present application, the first CSI reporting configuration is used to configure two RS resource sets for channel measurement, the first and second RS resources belonging to the two RS resource sets for channel measurement, respectively.

According to one aspect of the present application, the second RS resource and the first RS resource belong to an RS resource corresponding to the same RS resource index, and the quasi co-location information of the second RS resource is different from the quasi co-location information of the first RS resource.

According to one aspect of the present application, the quasi co-location information of the first RS resource and the quasi co-location information of the second RS resource belong to configuration information of the first RS resource; or alternatively, the quasi co-location information of the second RS resource relies on the first index set.

The present application discloses a first node device for wireless communication, comprising:
a first receiver receiving a first CSI reporting configuration; receiving a first signaling;
a first transmitter sending a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

The present application discloses a second node device for wireless communication, comprising:
a second transmitter, sending a first CSI reporting configuration; receiving a first signaling;
a second receiver receiving a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As an embodiment, the present application has the following advantages over conventional schemes:
- According to the signaling of the protocol layer under the RRC layer (such as MAC CE or physical layer signaling), the calculation of the CSI report quantity can be more quickly adjusted to adapt to the changes of environment and scene.

### Description of Drawings

Other features, objects, and advantages of the present application will become more apparent by reading the detailed description of the non-limiting embodiments with reference to the following drawings:
FIG. 1 illustrates a flow chart of receiving a first CSI reporting configuration and a first signaling and sending a first CSI according to one embodiment of the present application;
FIG. 2 illustrates a schematic diagram of a network architecture according to one embodiment of the present application;
FIG. 3 shows a schematic diagram of an embodiment of a wireless protocol architecture for a user plane and a control plane, according to one embodiment of the present application;
FIG. 4 shows a schematic view of a first communications device and a second communications device according to one embodiment of the present application;
FIG. 5 illustrates a flow chart of wireless transmission according to one embodiment of the present application;
FIG. 6 shows a schematic diagram of a first report quantity according to one embodiment of the present application;
FIG. 7 shows a schematic diagram of a first report quantity according to another embodiment of the present application;
FIG. 8 shows a schematic diagram of a first report quantity according to another embodiment of the present application;
FIG. 9 shows a schematic view of a second RS resource according to one embodiment of the present application;
FIG. 10 shows a schematic view of a second RS resource according to another embodiment of the present application;
FIG. 11 shows a schematic diagram of quasi co-location information for a second RS resource, according to one embodiment of the present application;
FIG. 12 shows a schematic diagram of quasi co-location information for a second RS resource according to another embodiment of the present application;
FIG. 13 shows a structural block diagram of a processing apparatus for use in a first node device, according to one embodiment of the present application;
FIG. 14 shows a structural block diagram of a processing apparatus for use in a second node device, according to one embodiment of the present application.

### Description of Embodiments

The technical solutions of the present application will be described in further detail below in conjunction with the accompanying drawings, and it is to be noted that the embodiments in the present application and the features in the embodiments may be arbitrarily combined with each other without conflict.

### Embodiment 1

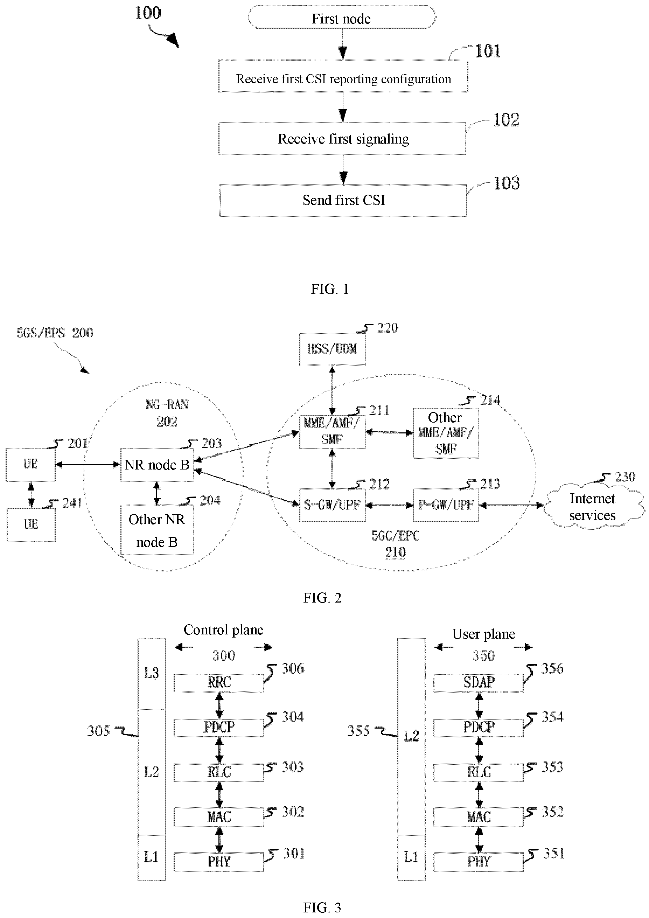

Embodiment 1 illustrates a flow chart of receiving a first CSI reporting configuration and a first signaling and sending a first CSI according to one embodiment of the present application, as shown in FIG. 1. A first node 100 shown in FIG. 1 receives a first CSI reporting configuration in step 101; receives a first signaling in step 102; and sends a first CSI in step 103, each box representing one step.

In Embodiment 1, the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

Typically, the first CSI (Channel State Information) reporting configuration includes one or more RRC IEs (Information Element).

Typically, the first CSI reporting configuration includes an RRC IE.

Typically, the first CSI reporting configuration includes an RRC IE and the name of the first CSI reporting configuration includes CSI-ReportConfig.

Typically, the first CSI reporting configuration includes an RRC IE and the name of the first CSI reporting configuration includes CSI.

Typically, the first CSI reporting configuration includes RRC IE CSI-ReportConfig.

As an embodiment, the first CSI reporting configuration includes two domains for channel measurement resource configuration, the first resource configuration being one of the two domains for channel measurement resource configuration.

As an embodiment, the first CSI reporting configuration includes two domains whose names include resourcesForChannelMeasurement, the first resource configuration being one of the two domains whose names include resourcesForChannelMeasurement.

Typically, the first resource configuration includes RRC IE CSI-ResourceConfig.

As an embodiment, the configuration information of one RS resource includes at least the occupied time-frequency resource and quasi co-location (QCL) information.

As an embodiment, the configuration information of one RS resource includes at least the occupied time-frequency resource or the time-frequency resource occupied in quasi co-location (QCL) information.

Typically, the configuration information of one CSI-RS resource includes at least the occupied time-frequency resource and quasi co-location (QCL) information.

As one embodiment, the first CSI reporting configuration is also used to configure at least one of an RS (Reference Signal) resource for interference measurement or the first CSI report quantity.

As one embodiment, the first CSI reporting configuration is also used to configure an RS resource for interference measurement.

As one embodiment, the first CSI reporting configuration is also used to configure a report quantity that the first CSI includes, and the report quantity included in the first CSI at least comprises the first resource indicator and the first report quantity.

Typically, the first resource configuration includes a partial domain (field) in an RRC IE.

Typically, the first resource configuration includes a resourcesForChannelMeasurement field in an RRC IE.

Typically, the first resource configuration includes the resourcesForChannelMeasuring field in RRC IE CSI-ReportConfig.

As an embodiment, the first resource configuration includes an index of each of the N RS resources.

As an embodiment, the first resource configuration includes configuration information for each of the N RS resources.

Typically, the N RS resources are used for channel measurements.

Typically, the N RS resources are used for at least channel measurements in channel measurements or interference measurements.

As an embodiment, each of the N RS resources is a CSI-RS (Channel Status Information Reference Signal) resource and the first resource indicator is a CSI-RS resource indicator (CRI).

As an embodiment, each of the N RS resources is an SS (Synchronization Signal)/PBCH (Physical Broadcast Channel) block resource, and the first resource indicator is an SS/PBCH Block Resource indicator (SSBRI).

As an embodiment, any one of the N RS resources is a CSI-RS resource or an SS/PBCH block resource, and the first resource indicator is a CSI-RS resource indicator (CRI) or an SS/PBCH block resource indicator (SS/PBCH Block Resource indicator (SSBRI).

As an embodiment, the first report quantity is any one of a PMI (Precoding Matrix Indicator), a CQI (Channel Quality Indicator), an RI (Rank Indicator), an L1-RSRP (Layer 1-Reference Signal received power) or an L1-SINR (Layer 1-Signal to Interference and Noise Ratio).

As one embodiment, the first CSI includes only the first resource indicator and the first report quantity.

As an embodiment, the first CSI also includes report quantity other than the first resource indicator and the first report quantity. The report quantity other than the first resource indicator and the first report quantity is one of a PMI (Precoding Matrix Indicator), a CQI (Channel Quality Indicator), an RI (Rank Indicator), an L1-RSRP (Layer 1-Reference Signal received power) or an L1-SINR (Layer 1-Signal to Interference and Noise Ratio), that is different from the first report quantity.

As an embodiment, the first CSI includes a CRI, an RI, a PMI and a CQI, the first resource indicator being a CRI, the first report quantity being one of an RI, a PMI or a CQI.

As one embodiment, the first CSI includes a CRI, an RI, and a PMI, the first resource indicator being a CRI, the first report quantity being an RI or a PMI.

As one embodiment, the first CSI includes a CRI, an RI, and a CQI, the first resource indicator being a CRI, the first report quantity being an RI or a CQI.

As one embodiment, the first CSI includes a CRI and an L1-RSRP, the first resource indicator being a CRI, and the first report quantity being an L1-RSRP.

As one embodiment, the first CSI includes an SSBRI and an L1-RSRP, the first resource indicator being an SSBRI, and the first report quantity being an L1-RSRP.

As an embodiment, the first CSI includes a CRI and an L1-SINR, the first resource indicator being a CRI, and the first report quantity being an L1-SINR.

As an embodiment, the first CSI includes an SSBRI and an L1-SINR, the first resource indicator being an SSBRI, and the first report quantity being an L1-SINR.

As one embodiment, the first resource indicator includes a first bit sequence, the range of values for the first bit sequence including the N resource indicator values.

As an embodiment, the N resource indicator values are respectively N sets of bit values of the first bit sequence.

As an embodiment, the N resource indicator values are respectively N sets of bit values.

As an embodiment, the N resource indicator values are respectively N non-negative integers.

As an embodiment, the N resource indicator values are respectively N positive integers.

As an embodiment, the N resource indicator values are 0, 1, ..., N-1, respectively.

As an embodiment, the N resource indicator values are 1, 2, ..., N, respectively.

### Embodiment 2

Embodiment 2 illustrates a schematic diagram of a network architecture according to one embodiment of the present application, as shown in FIG. 2.

FIG. 2 illustrates a network architecture 200 of an LTE (Long-Term Evolution), LTE-A (Long-Term Evolution Advanced) and future 5G system. The network architecture 200 of LTE, LTE-A, and future 5G system is called EPS (Evolved Packet System) 200. The 5G NR or LTE network architecture 200 may be referred to as 5GS (5G System)/EPS (Evolved Packet System) 200 or some other suitable term. The 5GS/EPS 200 may include one or more UE (User Equipment) 201, one UE241 for sidelink communication with UE201, an NG-RAN (next generation wireless access network) 202, a 5GC (5G CoreNetwork)/EPC (Evolved Packet Core) 210, an HSS (Home Subscriber Server)/UDM (Unified Data Management) 220, and an Internet service 230. The 5GS/EPS 200 may be interconnected with other access networks, but these entities/interfaces are not shown for simplicity. As shown in FIG. 2, the 5GS/EPS 200 provides packet exchange services, however it will be readily understood by those skilled in the art that various concepts presented throughout the present application can be extended to a network providing circuit exchange services. The NG-RAN 202 includes an NR (New Radio) node B (gNB) 203 and another gNB 204. The gNB 203 provides user and control plane protocol termination towards the UE 201. The gNB 203 may be connected to the other gNB 204 via an Xn interface (e.g., backhaul). The gNB 203 may also be referred to as a base station, a base station transceiver, a radio base station, a radio transceiver, a transceiver function, a base service set (BSS), an extension service set (ESS), a TRP (transmitter receiver point), or some other suitable term. The gNB 203 provides access points to the 5GC/EPC 210 for the UE 201. Embodiments of the UE 201 include cellular phones, smart phones, session initiation protocol (SIP) phones, laptop computers, personal digital assistants (PDA), satellite radios, global positioning systems, multimedia devices, video devices, digital audio players (e.g., MP3 players), cameras, game consoles, drones, aircrafts, narrow band physical network devices, machine type communications devices, land vehicles, automobiles, wearable devices, or any other similar function devices. Those of ordinary skill in the art may also refer to the UE 201 as a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handheld, a user agent, a mobile client, a client, or some other suitable term. The gNB 203 is connected to the 5GC/EPC 210 via an S1/NG interface. The 5GC/EPC 210 includes an MME (Mobility Management Entity)/AMF (Authentication Management Field)/SMF (Session Management Function) 211, another MME/AMF/SMF214, an S-GW (Service Gateway)/UPF (User Plane Function) 212 and a P-GW (Packet Data Network Gateway)/UPF 213. The MME/AMF/SMF 211 is a control node that processes signaling between the UE 201 and the 5GC/EPC 210. Generally, the MME/AMF/SmF 211 provides carrier and connection management. All user IP (Internet Protocol) packets are transmitted via the S-GW/UPF 212, which is itself connected to the P-GW/UPF 213. The P-GW provides UE IP address assignment along with other functions. The P-GW/UPF 213 is connected to the Internet service 230. The Internet service 230 includes an operator's corresponding Internet protocol service, which may include, inter alia, the Internet, an intranet, an IMS (IP Multimedia Subsystem) and a Packet switching service.

As one embodiment, the first node in the present application includes the UE 201.

As one embodiment, the first node in the present application includes the UE 241.

As one embodiment, the second node in the present application includes the gNB 203.

### Embodiment 3

Embodiment 3 exemplifies a schematic diagram of an embodiment of a wireless protocol architecture for a user plane and a control plane, according to one embodiment of the present application, as shown in FIG. 3.

Embodiment 3 illustrates a schematic diagram of an embodiment of a wireless protocol architecture for a user plane and a control plane, according to one embodiment of the present application, as shown in FIG. 3. FIG. 3 is a schematic diagram illustrating an embodiment of a radio protocol architecture for a user plane 350 and a control plane 300, and FIG. 3 shows, with three layers, a radio protocol architecture for a control plane 300 between a first communication node device (RSU in UE, gNB or V2X) and a second communication node device (RSU in gNB, UE or V2X), or between two UEs: layers 1, 2 and 3. The layer 1 (L1 layer) is the lowest layer and implements various PHY (physical layer) signal processing functions. The L1 layer will be referred to herein as PHY 301. The layer 2 (L2 layer) 305 is over the PHY 301 and is responsible for the link between the first communication node device and the second communication node device, or between two UEs. The L2 layer 305 includes a MAC (Medium Access Control) sublayer 302, an RLC (Radio Link Control) sublayer 303, and a PDCP (Packet Data Convergence Protocol) sublayer 304, and these sublayers terminate at the second communication node device. The PDCP sublayer 304 provides multiplexes between different radio carriers and logical channels. The PDCP sublayer 304 also provides security by encrypting the data packet and trans-regional movement support for the first communication node device between the second communication node device. The RLC sublayer 303 provides segmentation and reassembly of the upper layer data packet, retransmission of the missing data packet, and reordering of the data packet to compensate for out-of-order reception due to HARQ. The MAC sublayer 302 provides multiplex between logical and transmission channels. The MAC sublayer 302 is also responsible for distributing various radio resources (e.g., resource blocks) in one cell between the first communication node devices. The MAC sublayer 302 is also responsible for HARQ operations. The RRC (Radio Resource Control) sublayer 306 in layer 3 (L3 layer) in the control plane 300 is responsible for obtaining the radio resources (i.e., radio carrier) and configuring the lower layer using RRC signaling between the second communication node device and the first communication node device. The radio protocol architecture of the user plane 350 includes a layer 1 (L1 layer) and a layer 2 (L2 layer). The radio protocol architecture for the first and second communication node devices in the user plane 350 for the physical layer 351, the PDCP sublayer 354 in the L2 layer 355, the RLC sublayer 353 in the L2 layer 355 and the MAC sublayer 352 in the L2 layer 355 is substantially the same as the corresponding layer and the sublayer in the control plane 300. However, the PDCP sublayer 354 also provides header compression for upper layer data packets to reduce radio transmission overhead. The L2 layer 355 in the user plane 350 also includes an SDAP (Service Data Adaption Protocol) sublayer 356 that is responsible for mapping between QoS streams and data radio bearer (DRB) to support diversity of the business. Although not shown, the first communication node device may have several upper layers over the L2 layer 355, including a network layer (e.g., an IP layer) that terminates at the P-GW on the network side and an application layer that terminates at the other end of the connection (e.g., a far-end UE, a server, etc.).

As an embodiment, the wireless protocol architecture in FIG. 3 applies to the first node in the present application.

As an embodiment, the wireless protocol architecture in FIG. 3 applies to the second node in the present application.

As an embodiment, the first signaling is created in the PHY 301, or the PHY 351.

As one embodiment, the first CSI reporting configuration is generated at the RRC sublayer 306.

As an embodiment, the first signaling is generated in the MAC sublayer 302.

As one embodiment, the first CSI is created in the PHY 301, or the PHY 351.

### Embodiment 4

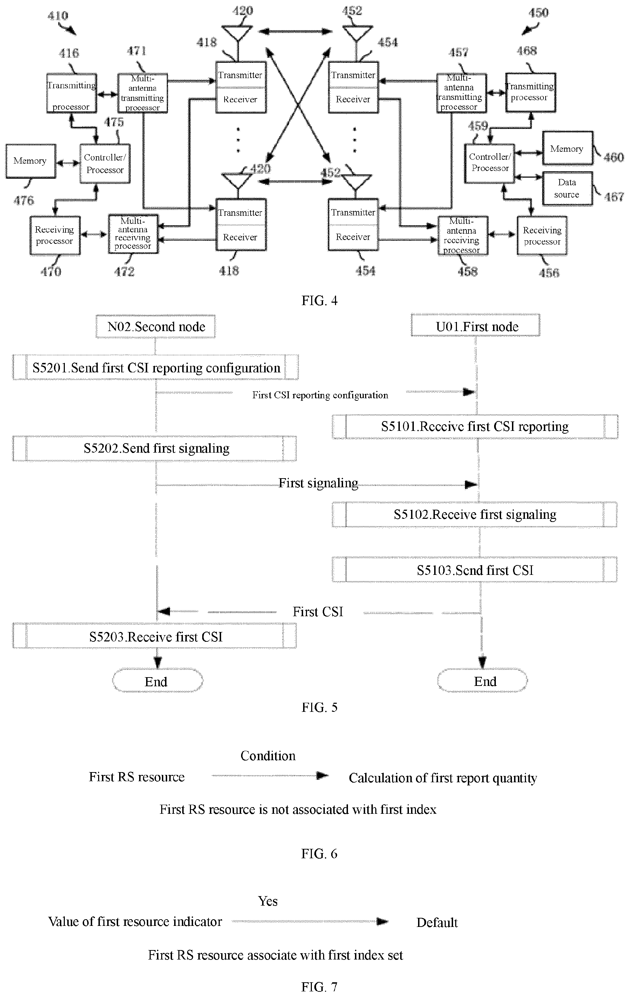

Embodiment 4 exemplifies a schematic diagram of a first communications device and a second communications device according to one embodiment of the present application, as shown in FIG. 4. FIG. 4 is a block diagram of a first communications device 410 and a second communications device 450 in communication with one another over an access network.

The first communications device 410 includes a controller/processor 475, a memory 476, a receiving processor 470, a transmitting processor 416, a multi-antenna receiving processor 472, a multi-antenna transmitting processor 471, a transmitter/receiver 418, and an antenna 420.

The second communications device 450 includes a controller/processor 459, a memory 460, a data source 467, a transmitting processor 468, a receiving processor 456, a multi-antenna transmitting processor 457, a multi-antenna receiving processor 458, a transmitter/receiver 454, and an antenna 452.

In a transmission from the first communications device 410 to the second communications device 450, at the first communications device 410, an upper layer data packet from the core network is provided to the controller/processor 475. The controller/processor 475 implements the functionality of the L2 layer. In the DL, the controller/processor 475 provides header compression, encryption, packet segmentation and reordering, multiplexing between logical and transmission channels, and radio resource allocation to the second communications device 450 based on various priority measures. The controller/processor 475 is also responsible for HARQ operation, retransmission of the lost package, and signaling to the second communications device 450. The transmission processor 416 and the multi-antenna transmission processor 471 implement various signal processing functions for the L1 layer (i.e., the physical layer). The transmitting processor 416 implements coding and interleaving to facilitate forward error correction (FEC) at the second communications device 450, as well as a constellation mapping based on various modulation schemes (e.g., bi-phase shift keying (BPSK), quadrature phase shift keying (QPSK), M-phase shift keying (M-PSK), M-quadrature amplitude modulation (M-QAM)). The multi-antenna transmitting processor 471 pre-codes encoded and modulated symbols in digital space, including codebook-based pre-coding and non-codebook-based pre-coding, and beam-forming processing to generate one or more parallel streams. The transmitting processor 416 then maps each parallel stream to the sub-carrier, juxtaposes the modulated symbol with a reference signal (e.g., frequency direct) in the time and/or frequency domain, and then uses an inverse Fast Fourier Transform (IFFT) to produce a physical channel that carries the time domain multi-carrier symbol flow. The multi-antenna transmitting processor 471 then sends the simulated pre-coding/beam-forming operation for the time domain multi-carrier symbol flow. Each transmitter 418 converts the baseband multi-carrier symbol flow provided by the multi-antenna transmitting processor 471 into a radio frequency flow, which is then provided to a different antenna 420.

In transmission from the first communications device 410 to the second communications device 450, at the second communications device 450, each receiver 454 receives a signal through its respective antenna 452. Each receiver 454 resumes information modulated onto a radio frequency carrier and converts the radio frequency flow into a baseband multi-carrier symbol flow to the receiving processor 456. The receiving processor 456 and the multi-antenna receiving processor 458 implement various signal processing functions of the L1 layer. The multi-antenna receiving processor 458 receives the simulated pre-coding/beam-forming operation for the baseband multi-carrier symbol flow from the receiver 454. The receiving processor 456 uses a Fast Fourier Transform (FFT) to transition the baseband multi-carrier symbol flow from the time domain to the frequency domain after receiving the simulated pre-coding/beam-forming operation. In the frequency domain, the physical layer data signal and the reference signal are demultiplexed by the receiving processor 456 where the reference signal is used for channel estimation and the data signal is detected by the multi-antenna receiving processor 458 to recover any parallel stream destined for the second communications device 450. The symbols on each parallel stream are demodulated and restored in the receiving processor 456 and generate a soft decision. The receiving processor 456 then decodes and de-interleaves the soft decision to resume the upper layer data and control signal transmitted by the first communications device 410 over the physical channel. The upper layer data and control signal are then provided to the controller/processor 459. The controller/processor 459 implements the functions of the L2 layer. The controller/processor 459 may be associated with a memory 460 that stores program code and data. The memory 460 may be referred to as a computer-readable medium. In the DL, the controller/processor 459 provides demultiplexing between transmission and logical channels, packet reassembly, decryption, header decompression, control signal processing to recover the upper layer data packet from the core network. The upper layer data packet is then provided to all protocol layers above the L2 layer. Various control signals may also be provided to L3 for L3 processing. The controller/processor 459 is also responsible for error detection using the Acknowledge ( ACK ) and/or Negative Acknowledge (NACK) protocols to support HARQ operations.

In transmission from the second communications device 450 to the first communications device 410, at the second communications device 450, the data source 467 is used to provide the upper layer data packet to the controller/processor 459. The data source 467 represents all protocol layers above the L2 layer. Similar to the transmission function at the first communications device 410 described in the DL, the controller/processor 459 implements header compression, encryption, packet segmentation, and reordering, and multiplexing between logical and transmission channels based on wireless resource allocation of the first communications device 410, implementing L2 layer functions for the user plane and control plane. The controller/processor 459 is also responsible for HARQ operation, retransmission of the lost package, and signaling to the first communications device 410. The transmitting processor 468 executes a modulation mapping, channel encoding, and the multi-antenna transmitting processor 457 pre-encodes the digital multi-antenna space, including codebook-based pre-coding and non-codebook-based pre-coding, and beam-forming processing, and then the transmitting processor 468 modulates the resulting parallel stream into multi-carrier/single-carrier symbol flows, which, after simulated precoding/beam-forming operations in the multi-antenna transmitting processor 457, are then provided to a different antenna 452 via the transmitter 454. Each transmitter 454 first converts the baseband symbol flow provided by the multi-antenna transmitting processor 457 into a radio frequency symbol flow, which is then provided to the antenna 452.

In the transmission from the second communications device 450 to the first communications device 410, the function at the first communications device 410 is similar to the receiving function at the second communications device 450 described in the transmission from the first communications device 410 to the second communications device 450. Each receiver 418 receives a radio frequency signal through its respective antenna 420, converts the received radio frequency signal into a baseband signal, and provides the baseband signal to the multi-antenna receiving processor 472 and the receiving processor 470. The receiving processor 470 and the multi-antenna receiving processor 472 collectively implement the functions of the L1 layer. The controller/processor 475 implements the function of the L2 layer. The controller/processor 475 may be associated with the memory 476 storing program code and data. The memory 476 may be referred to as a computer-readable medium. The controller/processor 475 provides demultiplexing between transmission and logical channels, packet reassembly, decryption, header decompression, control signal processing to recover the upper layer data packet from the second communications device 450. The upper layer data packet from the controller/processor 475 may be provided to the core network. The controller/processor 475 is also responsible for error detection using the ACK and/or NACK protocols to support HARQ operations.

As one embodiment, the second communications device 450 includes: at least one processor, and at least one memory comprising computer program code; the at least one memory and the computer program code configured for use with the at least one processor. The second communications device 450 device at least: receives a first CSI reporting configuration; receives a first signaling; sends a first CSI; wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As one embodiment, the second communications device 450 includes: a memory storing a computer-readable instruction program that, when executed by at least one processor, generates an action, the action comprising: receiving a first CSI reporting configuration; receiving a first signaling; sending a first CSI; wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As one embodiment, the first communications device 410 includes: at least one processor, and at least one memory comprising computer program code; the at least one memory and the computer program code configured for use with the at least one processor. The first communications device 410 device at least: sends a first CSI reporting configuration; receives a first signaling; receives a first CSI; wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As one embodiment, the first communications device 410 includes: a memory storing a computer-readable instruction program that, when executed by at least one processor, generates an action, the action comprising: sending a first CSI reporting configuration; receiving a first signaling; receiving a first CSI; wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As one embodiment, the first node in the present application includes the second communications device 450.

As one embodiment, the second node in the present application includes the first communications device 410.

As one embodiment, at least one of {the antenna 452, the receiver 454, the receiving processor 456, the multi-antenna receiving processor 458, the controller/processor 459, the memory 460, the data source 467} is used to receive the first CSI reporting configuration in the present application; at least one of {the antenna 420, the transmitter 418, the transmitting processor 416, the multi-antenna transmitting processor 471, the controller/processor 475, and the memory 476} is used to transmit the first CSI reporting configuration of the present application.

As one embodiment, at least one of {the antenna 452, the receiver 454, the receiving processor 456, the multi-antenna receiving processor 458, the controller/processor 459, the memory 460, the data source 467} is used to receive the first signaling in the present application; at least one of {the antenna 420, the transmitter 418, the transmitting processor 416, the multi-antenna transmitting processor 471, the controller/processor 475, the memory 476} is used to transmit the first signaling in the present application.

As one embodiment, at least one of {the antenna 452, the transmitter 454, the transmitting processor 468, the multi-antenna transmitting processor 457, the controller/processor 459, the memory 460} is used to send the first CSI of the present application; at least one of {the antenna 420, the receiver 418, the receiving processor 470, the multi-antenna receiving processor 472, the controller/processor 475, the memory 476} is used to receive the first CSI of the present application.

### Embodiment 5

Embodiment 5 exemplifies a flow chart of wireless transmission according to one embodiment of the present application, as shown in FIG. 5. In FIG. 5, the first node U01 and the second node N02 are two communication nodes transmitted through an air interface, respectively.

For the first node U01, the first CSI reporting configuration is received in step S5101, the first signaling is received in step S5102, and the first CSI is transmitted in step S5103.

For the second node N02, the first CSI reporting configuration is sent in step S5201; the first signaling is sent in step S5202; and the first CSI is received in step S5203.

In Embodiment 5, the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As an embodiment, the protocol layer to which the first signaling belongs is a MAC layer.

As an embodiment, the protocol layer to which the first signaling belongs is a MAC layer and the first signaling is a MAC CE.

As an embodiment, the protocol layer to which the first signaling belongs is a physical layer.

As an embodiment, the protocol layer to which the first signaling belongs is a physical layer and the first signaling is a physical layer signaling.

As an embodiment, the protocol layer to which the first signaling belongs is a physical layer, and the first signaling is DCI signaling.

As an embodiment, the first signaling is cell common.

As an embodiment, the first signaling is cell specific.

As an embodiment, the first signaling is UE group common.

As an embodiment, the first signaling is UE group specific.

As an embodiment, the first signaling is UE specific.

As an embodiment, the first signaling is used to update or indicate a spatial element.

As an embodiment, the first signaling is used to update or indicate the number of spatial elements.

As an embodiment, the first signaling is used to activate or deactivate at least one TCI (Transmission Configuration Indicator) state.

As an embodiment, the first signaling is used to activate at least one TCI (Transmission Configuration Indicator) state.

As an embodiment, the first signaling is used to deactivate at least one TCI (Transmission Configuration Indicator) state.

As an embodiment, the first signaling is used to activate a spatial element.

As an embodiment, the first signaling is used to deactivate a spatial element.

As an embodiment, the first signaling is used to activate or deactivate a spatial element.

As an embodiment, the first signaling is used to activate or deactivate the number of spatial elements.

As an embodiment, the first signaling is used to activate the number of spatial elements.

As an embodiment, the first signaling is used to deactivate the number of spatial elements.

As one embodiment, the spatial element includes a TCI state.

As an embodiment, the spatial element includes at least one of a TCI state, an antenna element, an antenna panel, an antenna port, a logical antenna port, a Transmit Radio Unit (TxRU), and a Transmission Reception Point (TRxP).

As one embodiment, the first signaling is used to indicate a first index set.

As one embodiment, the first signaling explicitly indicates a first index set.

As one embodiment, the first signaling implicitly indicates a first index set.

As an embodiment, the first signaling directly indicates a first index set.

As one embodiment, the first signaling indirectly indicates a first index set.

As one embodiment, the first index set includes an index.

As one embodiment, the first index set includes at least one index.

As one embodiment, the first index set includes a plurality of indexes.

As one embodiment, any index of the first index set is a TCI status index.

As one embodiment, any index of the first index set is an RS resource index.

As one embodiment, the first index set includes an index of an RS resource set.

As one embodiment, any index of the first index set is an index of an RS resource set.

As one embodiment, the first index set includes a coreplatePoolIndex value.

As one embodiment, any index of the first index set is a coresetPoolIndex value.

As an embodiment, the first index set includes an index of a CORESET (Control resource set) pool.

As an embodiment, any index of the first index set is an index of a CORESET (Control resource set) pool.

As an embodiment, any index of the first index set is an index of a CORESET (Control resource set).

Typically, the first index set includes only one index, any index of the first index set being the first index set.

Typically, one CORESET pool includes at least one CORESET.

Typically, the range of values for an index of a CORESET (Control resource set) pool includes 0 and 1.

As one embodiment, any index of the first index set relates to a spatial element.

As one embodiment, any index of the first index set is used to indicate an adjustment of a spatial element.

As one embodiment, any index of the first index set is used to determine the adjusted spatial element.

As one embodiment, any index of the first index set is used to indicate the adjusted spatial element.

As one embodiment, any index of the first index set is a non-negative integer.

As one embodiment, any index of the first index set is an integer.

As one embodiment, any index of the first index set is a real number.

As one embodiment, any index of the first index set is an identification.

As one embodiment, any index of the first index set is a bit sequence.

As one embodiment, the first index set is used to indicate a target RS resource set.

As one embodiment, any index of the first index set corresponds to at least one RS resource.

As one embodiment, the first index set is used to indicate at least one TCI state and the target RS resource set includes at least one RS resource indicated by the at least one TCI state indicated by the first index set.

As one embodiment, any index of the first index set is an index of one RS resource set of the target RS resource set.

As one embodiment, the target RS resource set includes at least one RS resource indicated by each index in the first index set.

As one embodiment, any index of the first index set is an index of CORESET, the target RS resource set including at least one RS resource indicated by a TCI state of CORESET(s) corresponding to the first index set.

As an embodiment, the target RS resource set includes at least one RS resource.

As an embodiment, the target RS resource set includes only one RS resource.

As an embodiment, the target RS resource set includes a CSI-RS resource.

As an embodiment, the target RS resource set includes SS/PBCH block resources.

As an embodiment, the target RS resource set includes at least one of a CSI-RS resource or a SS/PBCH block resource.

As an embodiment, the first signaling is used to deactivate the target RS resource set.

As an embodiment, the first signaling is used to activate the target RS resource set.

As an embodiment, the first signaling is used to indicate that the first node is not required to measure the target RS resource set.

As an embodiment, the first node is not required to measure the target RS resource set as a response to receiving the first signaling.

As an embodiment, the first signaling is a DCI and one domain of the first signaling indicates the first index set.

As an embodiment, the first signaling is a DCI, and a plurality of domains in the first signaling are collectively used to indicate the first index set.

As an embodiment, "an RS resource is deactivated" is meant to include: the first node does not measure the RS resource.

As an embodiment, "an RS resource is deactivated" is meant to include: the first node is not required to measure the RS resource.

As an embodiment, "an RS resource is deactivated" is meant to include: the first node releases the RS resource.

As an embodiment, "an RS resource is deactivated" is meant to include: the QCL information of the RS resource is updated.

As an embodiment, "an RS resource is deactivated" is meant to include: the first node believes that the RS resource is not present.

As an embodiment, "an RS resource is activated" is meant to include: the first node measures the RS resource.

As an embodiment, "an RS resource is activated" is meant to include: the first node believes that the RS resource exists.

As an embodiment, the meaning of the sentence "the first RS resource is associated with the first index set" includes: the quasi co-location information of the first RS resource is independent of the first index set; the meaning of the sentence "the first RS resource is not associated with the first index set" includes: the quasi co-location information of the first RS resource relates to the first index set.

As an embodiment, the meaning of the sentence "the first RS resource is associated with the first index set" includes: the first index set is used to indicate at least one TCI state, the quasi co-location information of the first RS resource is one of the at least one TCI state indicated by the first index set; the meaning of the sentence "the first RS resource is not associated with the first index set" includes: the first index set is used to indicate at least one TCI state, the quasi co-location information of the first RS resource does not belong to the at least one TCI state indicated by the first index set.

As an embodiment, the quasi co-location information of the first RS resource includes a TCI state; the meaning of the sentence "the first RS resource is associated with the first index set" includes: the first index set is used to indicate at least one TCI state, the quasi co-location information of the first RS resource is one of the at least one TCI state indicated by the first index set; the meaning of the sentence "the first RS resource is not associated with the first index set" includes: the first index set is used to indicate at least one TCI state, the quasi co-location information of the first RS resource does not belong to the at least one TCI state indicated by the first index set.

As an embodiment, the meaning of the sentence "the first RS resource is associated with the first index set" includes: the first index set is used to indicate at least one TCI state, one RS resource indicated by one of the TCI states indicated by the first index set being quasi co-location with the first RS resource; the meaning of the sentence "the first RS resource is not associated with the first index set" includes: the first index set is used to indicate at least one TCI state, and any of the RS resources indicated by any one TCI state indicated by the first index set is not quasi co-location with the first RS resource.

As an embodiment, the meaning of the sentence "the first RS resource is associated with the first index set" includes: the first index set is used to indicate at least one RS resource, the first RS resource being one of the at least one RS resource indicated by the first index set; the meaning of the sentence "the first RS resource is not associated with the first index set" includes: the first index set is used to indicate at least one RS resource, the first RS resource not belonging to the at least one RS resource indicated by the first index set.

As an embodiment, the meaning of the sentence "the first RS resource is associated with the first index set" includes: the first index set is used to indicate at least one RS resource, the first RS resource being a quasi co-location with one RS resource indicated by the first index set; the meaning of the sentence "the first RS resource is not associated with the first index set" includes: the first index set is used to indicate at least one RS resource that is not quasi co-location with one of the RS resources indicated by the first index set.

As an embodiment, the meaning of the phrase "two RS resources are quasi co-location" includes: the quasi co-location parameters of the two RS resources are the same; the meaning of the sentence "two RS resources are not quasi co-location" includes: the quasi co-location parameters for the two RS resources are not the same.

As an embodiment, the meaning of the sentence "the quasi co-location parameters of the two RS resources are not the same" includes: the first node does not assume that the quasi co-location parameters for the two RS resources are the same.

As an embodiment, the meaning of the phrase "two RS resources are quasi co-location" includes: the first node device assumes that the same quasi co-location parameter is used to receive the two RS resources; the meaning of the sentence "two RS resources are not quasi co-location" includes: the first node device does not assume that the same quasi co-location parameters are used to receive the two RS resources.

As an embodiment, the meaning of the phrase "two RS resources are quasi co-location" includes: The first node device assumes that the same quasi co-location parameters are used to send or receive the two RS resources; the meaning of the phrase "two RS resources are not quasi co-location" includes: the first node device does not assume that the same quasi co-location parameters are used to send or receive the two RS resources.

As an embodiment, the meaning of the phrase "two RS resources are quasi co-location" includes: the two RS resources have the same quasi co-location characteristics; the meaning of the phrase "two RS resources are quasi co-location" includes: the two RS resources have different quasi co-location characteristics.

As an embodiment, the meaning of the phrase "two RS resources are quasi co-location" includes: the two RS resources have the same spatial receiving parameter (Spatial Rx parameter); the meaning of the phrase "two RS resources are not quasi co-location" includes: the two RS resources have different spatial receiving parameters.

As an embodiment, the meaning of the phrase "two RS resources are quasi co-location" includes: the two RS resources have the same quasi co-location relationship; the meaning of the phrase "two RS resources are quasi co-location" includes: the two RS resources have different quasi co-location relationships.

As an embodiment, the meaning of the phrase "two RS resources are quasi co-location" includes: the two RS resources have the same quasi co-location hypothesis; the meaning of the phrase "two RS resources are quasi co-location" includes: the two RS resources have different quasi co-location assumptions.

As an embodiment, a TCI state indicates at least one RS resource and the type of quasi co-location parameter corresponding to each RS resource.

As an embodiment, the type of the quasi co-location parameter includes TypeA, TypeB, TypeC, and TypeD.

As an embodiment, the quasi co-location parameters of type TypeA include a Doppler shift, a Doppler spread, an average latency delay, a delay spread.

As one embodiment, the quasi co-location parameters of type TypeB include a Doppler shift, a Doppler spread.

As an embodiment, the quasi co-location parameters of type TypeC include a Doppler shift, an average latency.

As an embodiment, the quasi co-location parameters of type TypeD include a spatial receiving parameter (Spatial Rx parameter).

As an embodiment, the TypeA, the TypeB, the TypeC and the TypeD are specifically defined in Section 5.1.5 of 3GPP TS38.214.

As an embodiment, the quasi co-location parameters include one or more of a delay spread, a Doppler spread, a Doppler shift, an average delay, or a spatial Rx parameter.

As one embodiment, the quasi co-location parameters include a Doppler shift, a Doppler spread.

As an embodiment, the quasi co-location parameters include a Doppler shift, an average delay.

As an embodiment, the quasi co-location parameters include a spatial Rx parameter.

As one embodiment, the quasi co-location parameters include at least one of a spatial transmission parameter or a spatial Rx parameter.

As one embodiment, the quasi co-location parameters include a spatial Domain Receive Filter.

As one embodiment, the quasi co-location parameters include a spatial domain filter.

As an embodiment, the quasi co-location parameters include at least one of a spatial domain transmit filter or a spatial domain receive filter.

As an embodiment, the meaning of the phrase "a given RS resource corresponds to a given resource indicator value" includes: the given resource indicator value is used to indicate the given RS resource.

As an embodiment, the meaning of the phrase "a given RS resource corresponds to a given resource indicator value" includes: the given resource indicator value is used to determine an index of the given RS resource.

As an embodiment, the meaning of the phrase "a given RS resource corresponds to a given resource indicator value" includes: the given resource indicator value is an index of the given RS resource in a given RS resource set.

As an embodiment, the meaning of the phrase "a given RS resource corresponds to a given resource indicator value" includes: the given resource indicator value is a ranking of the given RS resource in a given RS resource set.

As an embodiment, the meaning of the phrase "a given RS resource corresponds to a given resource indicator value" includes: the given resource indicator value indicates a location of the given RS resource in a given RS resource set.

As an embodiment, the meaning of the phrase "a given RS resource corresponds to a given resource indicator value" includes: the given resource indicator value indicates the numbering of the given RS resource in a given RS resource set.

As an embodiment, the given RS resource is the first RS resource in the present application, the given RS resource set comprising the N RS resources, the given resource indicator value being the value of the first resource indicator.

As an embodiment, the given RS resource is the second RS resource in the present application, the given RS resource set is a set of RS resources comprising the second RS resource, and the given resource indicator value is the value of the first resource indicator.

As an embodiment, the given RS resource is one of the N RS resources in the present application, the given RS resource set includes the N RS resources, and the given resource indicator value is a resource indicator value corresponding to the given RS resource in the N resource indicator values.

Typically, an index of one RS resource is used to identify the one RS resource.

As an embodiment, there is one resource indicator value in the N resource indicator values that corresponds to greater than one RS resource.

As an embodiment, any one of the N resource indicator values corresponds to greater than one RS resource.

As an embodiment, whether the first RS resource is associated with the first index set is used to determine whether the calculation of the first report quantity is conditioned on the first RS resource.

As an embodiment, the calculation of the first report quantity is related to whether the first RS resource is associated with the first index set.

As an embodiment, when and only when the first RS resource is not associated with the first index set, the calculation of the first report quantity is conditioned on the first RS resource.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As a sub-embodiment of the above embodiment, when the first RS resource is associated with the first index set, the value of the first report quantity is default.

As a sub-embodiment of the above embodiment, when the first RS resource is associated with the first index set, the calculation of the first report quantity is conditioned on the second RS resource.

As an embodiment, when and only when the first RS resource is associated with the first index set, the calculation of the first report quantity is conditioned on the first RS resource.

As a sub-embodiment of the above embodiment, the first signaling is used for activation.

As a sub-embodiment of the above embodiment, the first signaling is used to activate at least one RS resource.

As a sub-embodiment of the above embodiment, the first signaling is used to activate at least one TCI state.

As a sub-embodiment of the above embodiment, the first signaling is used to activate a spatial element.

As a sub-embodiment of the above embodiment, when the first RS resource is not associated with the first index set, the value of the first report quantity is default.

As a sub-embodiment of the above embodiment, when the first RS resource is not associated with the first index set, the calculation of the first report quantity is conditioned on the second RS resource.

### Embodiment 6

Embodiment 6 exemplifies a schematic diagram of a first report quantity according to one embodiment of the present application; as shown in FIG. 6.

In Embodiment 6, the calculation of the first report quantity is conditioned on the first RS resource when and only when the first RS resource is not associated with the first index set.

As an embodiment, the first resource indicator is used to indicate the first RS resource when the calculation of the first report quantity is conditioned on the first RS resource.

As an embodiment, the calculation of the first report quantity is conditioned on one of the first and second RS resources.

As one embodiment, the first resource configuration is also used to configure the second RS resource.

As an embodiment, the meaning of the phrase "the calculation of the first report quantity is conditioned on the first RS resource" includes: the first RS resource is used for channel measurement, the first report quantity is calculated based at least on the channel measurement of the first RS resource; the meaning of the sentence "the calculation of the first report quantity is conditioned on the second RS resource" includes: the second RS resource is used for channel measurement, the first report quantity being calculated based at least on the channel measurement of the second RS resource.

As an embodiment, the meaning of the phrase "the calculation of the first report quantity is conditioned on the first RS resource" includes: the first RS resource is used for at least the channel measurement in channel measurement or interference measurement, the first report quantity being calculated based at least on the channel measurement of the first RS resource or at least the channel measurement in the interference measurement; the meaning of the sentence "the calculation of the first report quantity is conditioned on the second RS resource" includes: the second RS resource is used for at least the channel measurement in a channel measurement or an interference measurement, the first report quantity being calculated based at least on the channel measurement of the second RS resource or at least the channel measurement in the interference measurement.

As an embodiment, the meaning of the phrase "the calculation of the first report quantity is conditioned on the first RS resource" includes: the first RS resource is used for channel measurement, the first report quantity being based on interference measurement and based on the channel measurement of the first RS resource, and calculated according to a generation criterion; the meaning of the sentence "the calculation of the first report quantity is conditioned on the second RS resource" includes: The second RS resource is used for channel measurement, the first report quantity being based on interference measurement and based on the channel measurement of the second RS resource, and calculated according to a generation criterion; the generation criterion is one of maximum transmission capacity, maximum SINR, and minimum BLER (Block Error Rate).

As an embodiment, the meaning of the phrase "the calculation of the first report quantity is conditioned on the first RS resource" includes: the first RS resource is used for channel measurement, the first report quantity being at least based on the channel measurement of the first RS resource and calculated according to the maximum transmission capacity criteria; the meaning of the sentence "the calculation of the first report quantity is conditioned on the second RS resource" includes: the second RS resource is used for channel measurement, the first report quantity being based at least on the channel measurement of the second RS resource and calculated according to a maximum transmission capacity criterion.

As an embodiment, the meaning of the phrase "the calculation of the first report quantity is conditioned on the first RS resource" includes: the first RS resource is used for channel measurement, the first report quantity being based at least on the channel measurement of the first RS resource and calculated according to the maximum SINR criteria; the meaning of the sentence "the calculation of the first report quantity is conditioned on the second RS resource" includes: the second RS resource is used for channel measurement, the first report quantity being based at least on the channel measurement of the second RS resource and calculated according to the maximum SINR criterion.

As an embodiment, the meaning of the phrase "the calculation of the first report quantity is conditioned on the first RS resource" includes: the first RS resource is used for channel measurement, the first report quantity being at least based on the channel measurement of the first RS resource and calculated according to the minimum BLER criteria; the meaning of the phrase "the calculation of the first report quantity is conditioned on the second RS resource" includes: the second RS resource is used for channel measurement, the first report quantity being based at least on the channel measurement of the second RS resource and calculated according to a minimum BLER criterion.

As an embodiment, the meaning of the phrase "the calculation of the first report quantity is conditioned on the first RS resource" includes: the first RS resource is used for at least the channel measurement in a channel measurement or an interference measurement, the first report quantity being at least based on the channel measurement of the first RS resource or at least the channel measurement in the interference measurement, and calculated according to a maximum transmission capacity criterion; the meaning of the sentence "the calculation of the first report quantity is conditioned on the second RS resource" includes: the second RS resource is used for at least the channel measurement in a channel measurement or an interference measurement, the first report quantity being calculated based at least on the channel measurement of the second RS resource or at least the channel measurement in the interference measurement, and calculated according to a maximum transmission capacity criterion.

As an embodiment, the meaning of the phrase "the calculation of the first report quantity is conditioned on the first RS resource" includes: the first RS resource is used for at least the channel measurement in channel measurement or interference measurement, the first report quantity being at least based on the channel measurement of the first RS resource or at least the channel measurement in the interference measurement, and calculated according to a maximum SINR criterion; the meaning of the sentence "the calculation of the first report quantity is conditioned on the second RS resource" includes: the second RS resource is used for at least the channel measurement in a channel measurement or an interference measurement, the first report quantity being calculated based at least on the channel measurement of the second RS resource or at least the channel measurement in the interference measurement, and calculated according to a maximum SINR criterion.

As an embodiment, the meaning of the phrase "the calculation of the first report quantity is conditioned on the first RS resource" includes: the first RS resource is used for at least the channel measurement in a channel measurement or an interference measurement, the first report quantity being at least based on the channel measurement of the first RS resource or at least the channel measurement in the interference measurement, and calculated according to a minimum BLER criterion; and the meaning of the sentence "the calculation of the first report quantity is conditioned on the second RS resource" includes: the second RS resource is used for at least the channel measurement in a channel measurement or an interference measurement, the first report quantity being calculated based at least on the channel measurement of the second RS resource or at least the channel measurement in the interference measurement, and calculated according to a minimum BLER criterion.

### Embodiment 7

Embodiment 7 exemplifies a schematic diagram of a first report quantity according to another embodiment of the present application; as shown in FIG. 7.

In Embodiment 7, the value of the first report quantity is default when the first RS resource is associated with the first index set.

As an embodiment, when the value of the first report quantity is default, the value of the first resource indicator is a default value.

As an embodiment, the phrase "the value of the first report quantity is default" is meant to include: the value of the first report quantity is reserved.

As an embodiment, the phrase "the value of the first report quantity is default" is meant to include: the value of the first report quantity indicates out of range.

As an embodiment, the phrase "the value of the first report quantity is default" is meant to include: the value of the first report quantity does not indicate an integer.

As an embodiment, the phrase "the value of the first report quantity is default" is meant to include: the value of the first report quantity does not indicate a value.

As an embodiment, the phrase "the value of the first report quantity is default" is meant to include: the value of the first report quantity is 0.

As an embodiment, the phrase "the value of the first report quantity is default" is meant to include: the value of the first report quantity is 1.

As an embodiment, the phrase "the value of the first report quantity is default" is meant to include: the value of the first report quantity is a minimum of the candidate range of the first report quantity.

As an embodiment, the phrase "the value of the first report quantity is default" is meant to include: the value of the first report quantity is the worst value in the candidate range of the first report quantity.

As an embodiment, the phrase "the value of the first report quantity is default" is meant to include: the first report quantity is RI, and the value of the first report quantity is 1.

As an embodiment, the phrase "the value of the first report quantity is default" is meant to include: the first report quantity is CQI, and the value of the first report quantity is a minimum CQI value.

As an embodiment, the phrase "the value of the first report quantity is default" is meant to include: the first report quantity is L1-RSRP, and the value of the first report quantity is a minimum L1-RSRP value.

As an embodiment, the phrase "the value of the first report quantity is default" is meant to include: the first report quantity is L1-SINR, and the value of the first report quantity is the minimum L1-SINR value.

As an embodiment, the phrase "the value of the first report quantity is default" is meant to include: the first report quantity is a PMI, and the value of the first report quantity is a minimum PMI value.

### Embodiment 8

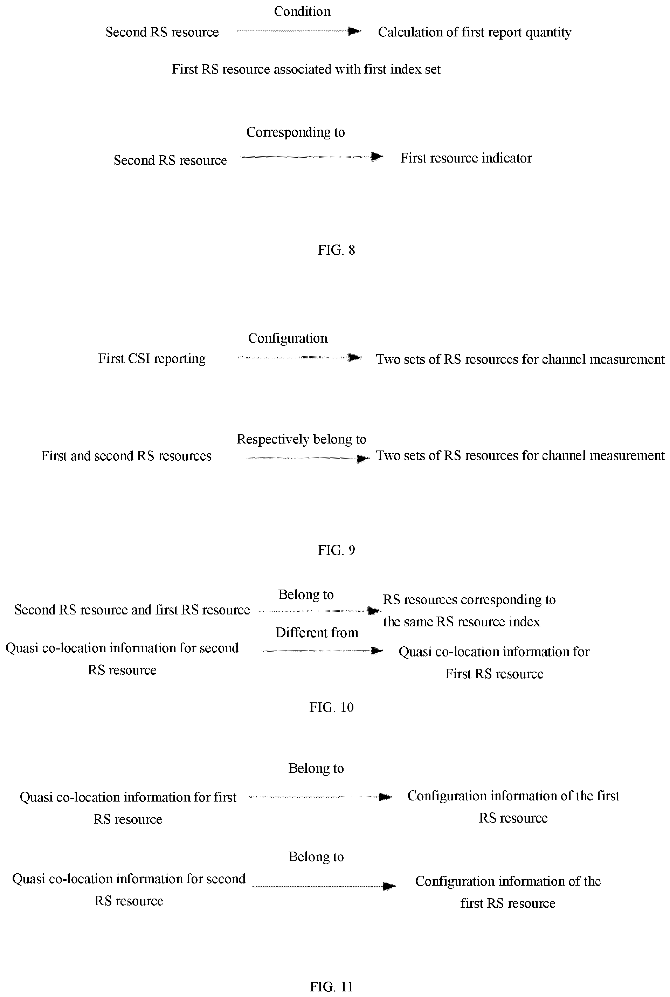

Embodiment 8 exemplifies a schematic diagram of a first report quantity according to another embodiment of the present application; as shown in FIG. 8.

In Embodiment 8, when the first RS resource is associated with the first index set, the calculation of the first report quantity is conditioned on a second RS resource; the second RS resource corresponds to the value of the first resource indicator.

As an embodiment, the first resource indicator is used to indicate the second RS resource when the calculation of the first report quantity is conditioned on the second RS resource.

As an embodiment, the value of the first resource indicator corresponds to the first and second RS resources.

As an embodiment, when the first RS resource is associated with the first index set, the calculation of the first report quantity is conditioned on a second RS resource, which is not associated with the first index set.

As an embodiment, whether the calculation of the first report quantity is conditioned on the first RS resource of the second RS resource depends on whether the first RS resource is associated with the first index set.

As an embodiment, in response to receiving the first signaling, the first node determines whether the calculation of the first report quantity is conditioned on the first RS resource or conditioned on the second RS resource.

As an embodiment, the second RS resource is a CSI-RS resource or an SS/PBCH block resource.

As an embodiment, the second RS resource is a CSI-RS resource.

As an embodiment, the second RS resource is an SS/PBCH block resource.

As one embodiment, the second RS resource relies on the first index set.

As one embodiment, the second RS resource relies on one of the indexes in the first index set.

As one embodiment, the second RS resource relies on at least one index of the first index set.

As an embodiment, the second RS resource and the first RS resource belong to the same RS resource set of M1 RS resource sets, and M1 is a positive integer greater than 1.

As a sub-embodiment of the above embodiment, the M1 RS resource sets are configurable.

As an embodiment, the second RS resource corresponds to one of the M2 indexes, the first RS resource corresponds to one of the M2 indexes, the second RS resource and the first RS resource correspond to the same index of the M2 indexes, and M2 is a positive integer greater than 1.

As a sub-embodiment of the above embodiment, the M2 indexes are respectively the indexes of M2 RS resource sets.

As a sub-embodiment of the above embodiment, the M2 indexes are respectively the indexes of the M2 TCI state sets.

As a sub-embodiment of the above embodiment, the M2 indexes are respectively the indexes of M2 CORESET pools, and one CORESET pool includes at least one CORESET.

As a sub-embodiment of the above embodiment, the M2 indexes are respectively M2 power control closed loop indexes.

As a sub-embodiment of the above embodiment, the M2 indexes are respectively M2 power control loop indexes.

As a sub-embodiment of the above embodiment, the M2 indexes are respectively M2 power control adjustment state indexes.

As a sub-embodiment of the above embodiment, the M2 indexes are respectively M2 sri-PUSCH-ClosedLoopIndex.

### Embodiment 9

Embodiment 9 exemplifies a schematic diagram of a second RS resource according to one embodiment of the present application; as shown in FIG. 9.

In Embodiment 9, the first CSI reporting configuration is used to configure two RS resource sets for channel measurement, the first and second RS resources each belonging to the two RS resource sets for channel measurement.

As an embodiment, the value of the first resource indicator corresponds to the first and second RS resources.

As an embodiment, the first and second RS resources respectively have the same index in the RS resource set for channel measurement to which they belong, and the value of the first resource indicator indicates an index of the first RS resource in the RS resource set for channel measurement to which it belongs.

As one embodiment, the first and second RS resources are ranked the same in the RS resource set for channel measurement to which they belong, the value of the first resource indicator indicates the order of the first RS resource in the RS resource set for channel measurement to which it belongs.

As an embodiment, the first and second RS resources are at the same location in their respective RS resource sets for channel measurement, and the value of the first resource indicator indicates the location of the first RS resource in its RS resource set for channel measurement.

As an embodiment, the first RS resource is the i-th RS resource in the RS resource set for channel measurement to which it belongs, and the second RS resource is the i-th RS resource in the RS resource set for channel measurement to which it belongs; the value of the first resource indicator indicates the i.

As a sub-embodiment of the embodiment, the i is a positive integer.

As a sub-embodiment of the embodiment, the i is a non-negative integer.

As a sub-embodiment of the embodiment, the value of the first resource indicator is equal to the i.

As a sub-embodiment of the embodiment, the value of the first resource indicator indicates the i plus 1.

As a sub-embodiment of the embodiment, the value of the first resource indicator indicates the i minus 1.

As one embodiment, the first resource configuration is also used to configure the second RS resource.

As an embodiment, the first CSI reporting configuration includes the first resource configuration and a second resource configuration, the first resource configuration being used for configuring one RS resource set comprising the first RS resource in the two RS resource sets for channel measurement, the second resource configuration being used for configuring one RS resource set comprising the second RS resource in the two RS resource sets for channel measurement.

Typically, the second resource configuration is a domain that the name in the RRC IE includes resourcesForChannelMeasurement.

Typically, the second resource configuration is a domain that the name in the RRC IE includes ChannelMeasurement.

Typically, the second resource configuration is a domain that the name in RRC IE CSI-ReportConfig includes resourcesForChannelMeasurement.

Typically, the second resource configuration is a domain that the name in RRC IE CSI-ReportConfig includes ChannelMeasurement.

Typically, both the second resource configuration and the second resource configuration belong to the RRC IE CSI-ResourceConfig.

Typically, the second resource configuration and the second resource configuration belong to the same RRC IE.

Typically, the second resource configuration includes a partial domain (field) in an RRC IE.

As an embodiment, the second resource configuration includes an index of each RS resource in one RS resource set comprising the second RS resource in the two RS resource sets for channel measurement.

As an embodiment, the second resource configuration includes configuration information of each RS resource in one RS resource set comprising the second RS resource in the two RS resource sets for channel measurement.

As an embodiment, the index of the first RS resource and the index of the second RS resource are different.

Typically, one of the two RS resource sets for channel measurement comprising the first RS resource includes the N RS resources in the present application.

As an embodiment, the one of the two RS resource sets for channel measurement comprising the second RS resource includes at least one of a CSI-RS resource or an SS/PBCH block resource.

As an embodiment, the one of the two RS resource sets for channel measurement comprising the second RS resource comprises only the SS/PBCH block resource.

As an embodiment, one of the two RS resource sets for channel measurement comprising the second RS resource includes the CSI-RS resource only.

### Embodiment 10

Embodiment 10 exemplifies a schematic diagram of a second RS resource according to another embodiment of the present application; as shown in FIG. 10.

In Embodiment 10, the second RS resource and the first RS resource belong to an RS resource corresponding to the same RS resource index, and the quasi co-location information of the second RS resource is different from the quasi co-location information of the first RS resource.

As one embodiment, the second RS resource and the first RS resource occupy the same resource.

As an embodiment, the second RS resource and the first RS resource occupy the same resource element (RE).

As an embodiment, the second RS resource and the first RS resource belong to an NZP CSI-RS resource corresponding to the same NZP-CSI-RS resource index.

As an embodiment, the index of the second RS resource and the index of the first RS resource are the same NZP-CSI-RS resource index.

As an embodiment, the second RS resource and the first RS resource belong to an RS resource corresponding to the same RS resource index, and the second RS resource and the first RS resource are not quasi co-location.

### Embodiment 11

Embodiment 11 exemplifies a schematic diagram of quasi co-location information for a second RS resource, according to one embodiment of the present application; as shown in FIG. 11.

In Embodiment 11, the quasi co-location information for the first and second RS resources belongs to the configuration information for the first RS resource.

As an embodiment, the quasi co-location information of one RS resource includes a TCI state.

As an embodiment, the quasi co-location information of an RS resource includes quasi co-location parameters.

As an embodiment, the quasi co-location information of an RS resource includes one of a TCI status or quasi co-location parameters.

As an embodiment, the quasi co-location information of one RS resource includes at least one of a spatial domain transmit filter, a spatial domain receive filter, a spatial domain transmit parameter, or a spatial receiving parameter.

### Embodiment 12

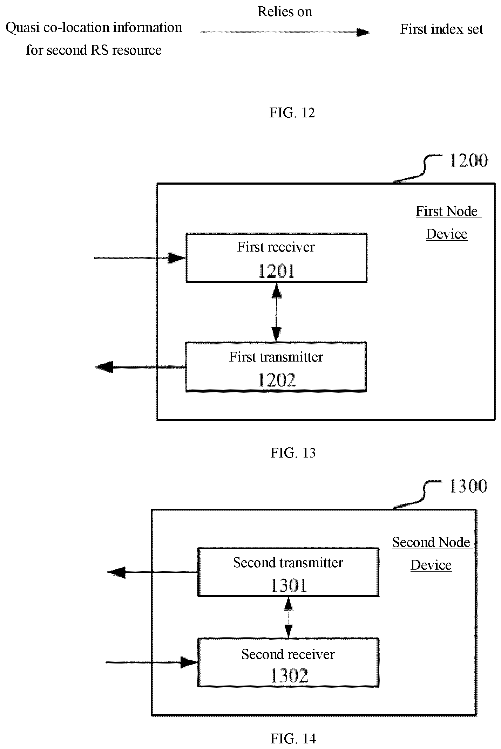

Embodiment 12 exemplifies a schematic diagram of quasi co-location information for a second RS resource, according to another embodiment of the present application; as shown in FIG. 12.

In Embodiment 12, the quasi co-location information of the second RS resource relies on the first index set.

As an embodiment, the meaning of the phrase "the quasi co-location information of the second RS resource depends on the first index set" includes: the first index set is used to indicate at least one TCI state, the quasi co-location information of the second RS resource is not a TCI state indicated by the first index set.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As an embodiment, the meaning of the phrase "the quasi co-location information of the second RS resource depends on the first index set" includes: the first index set is used to indicate at least one TCI state, the quasi co-location information of the second RS resource being one TCI state other than the at least one TCI state indicated by the first index set.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As an embodiment, the meaning of the phrase "the quasi co-location information of the second RS resource depends on the first index set" includes: the first index set is used to indicate at least one TCI state, one RS resource other than the RS resource indicated by the at least one TCI state indicated by the first index set is quasi co-location with the second RS resource.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As an embodiment, the meaning of the phrase "the quasi co-location information of the second RS resource depends on the first index set" includes: the first index set is used to indicate at least one TCI state, any of the RS resources indicated by any of the TCI states indicated by the first index set is not quasi co-location with the second RS resource.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As an embodiment, the meaning of the phrase "the quasi co-location information of the second RS resource depends on the first index set" includes: the first index set is used to indicate at least one RS resource, the second RS resource being a quasi co-location with one RS resource other than the RS resources indicated by the first index set.

As a sub-embodiment of the above embodiment, the first signaling is used for deactivation.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As an embodiment, the meaning of the phrase "the quasi co-location information of the second RS resource depends on the first index set" includes: The first index set is used to indicate at least one RS resource, the second RS resource being non-quasi co-location with any of the RS resources indicated by the first index set.

As a sub-embodiment of the above embodiment, the first signaling is used for deactivation.

As a sub-embodiment of the above embodiment, the first signaling is used to deactivate at least one RS resource.

As a sub-embodiment of the above embodiment, the first signaling is used to deactivate at least one TCI state.

As a sub-embodiment of the above embodiment, the first signaling is used to deactivate a spatial element.

As an embodiment, the meaning of the phrase "the quasi co-location information of the second RS resource depends on the first index set" includes: the quasi co-location information of the second RS resource relies on one of the indexes in the first index set.

As an embodiment, the meaning of the phrase "the quasi co-location information of the second RS resource depends on the first index set" includes: the quasi co-location information of the second RS resource relies on at least one index of the first index set.

As an embodiment, the meaning of the phrase "the quasi co-location information of the second RS resource depends on the first index set" includes: the first index set is used to indicate at least one TCI state, the quasi co-location information of the second RS resource being one of the at least one TCI state indicated by the first index set.

As a sub-embodiment of the above embodiment, the first signaling is used for activation.

As a sub-embodiment of the above embodiment, the first signaling is used to activate at least one RS resource.

As a sub-embodiment of the above embodiment, the first signaling is used to activate at least one TCI state.

As a sub-embodiment of the above embodiment, the first signaling is used to activate a spatial element.

As an embodiment, the meaning of the phrase "the quasi co-location information of the second RS resource depends on the first index set" includes: the first index set is used to indicate at least one TCI state, one RS resource indicated by one TCI state indicated by the first index set is quasi co-location with the second RS resource.

As a sub-embodiment of the above embodiment, the first signaling is used for activation.

As a sub-embodiment of the above embodiment, the first signaling is used to activate at least one RS resource.

As a sub-embodiment of the above embodiment, the first signaling is used to activate at least one TCI state.

As a sub-embodiment of the above embodiment, the first signaling is used to activate a spatial element.

As an embodiment, the meaning of the phrase "the quasi co-location information of the second RS resource depends on the first index set" includes: the first index set is used to indicate at least one RS resource, the second RS resource being one of the at least one RS resource indicated by the first index set.

As a sub-embodiment of the above embodiment, the first signaling is used for activation.

As a sub-embodiment of the above embodiment, the first signaling is used to activate at least one RS resource.

As a sub-embodiment of the above embodiment, the first signaling is used to activate at least one TCI state.

As a sub-embodiment of the above embodiment, the first signaling is used to activate a spatial element.

As an embodiment, the meaning of the phrase "the quasi co-location information of the second RS resource depends on the first index set" includes: the first index set is used to indicate at least one RS resource, the second RS resource being a quasi co-location with one RS resource indicated by the first index set.

As a sub-embodiment of the above embodiment, the first signaling is used for activation.

As a sub-embodiment of the above embodiment, the first signaling is used to activate at least one RS resource.

As a sub-embodiment of the above embodiment, the first signaling is used to activate at least one TCI state.

As a sub-embodiment of the above embodiment, the first signaling is used to activate a spatial element.

### Embodiment 13

Embodiment 13 exemplifies a structural block diagram of a processing apparatus for use in a first node device, according to one embodiment of the present application; as shown in FIG. 13. In FIG. 13, a processing device 1200 in the first node device includes a first receiver 1201 and a first transmitter 1202.

As one embodiment, the first node device is a user device.

As one embodiment, the first node device is a relay node device.

As one embodiment, the first receiver 1201 includes at least one of {the antenna 452, the receiver 454, the receiving processor 456, the multi-antenna receiving processor 458, the controller/processor 459, the memory 460, the data source 467} of Embodiment 4.

As one embodiment, the first transmitter 1202 includes at least one of {the antenna 452, the transmitter 454, the transmitting processor 468, the multi-antenna transmitting processor 457, the controller/processor 459, the memory 460, the data source 467} of Embodiment 4.

The first receiver 1201 receives a first CSI reporting configuration; receives a first signaling.

The first transmitter 1202 sends a first CSI.

In Embodiment 12, the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As an embodiment, when and only when the first RS resource is not associated with the first index set, the calculation of the first report quantity is conditioned on the first RS resource.

As an embodiment, when the first RS resource is associated with the first index set, the value of the first report quantity is default.

As an embodiment, when the first RS resource is associated with the first index set, the calculation of the first report quantity is conditioned on a second RS resource; the second RS resource corresponds to the value of the first resource indicator.

As an embodiment, the first CSI reporting configuration is used to configure two RS resource sets for channel measurement, the first and second RS resources each belonging to the two RS resource sets for channel measurement.

As an embodiment, the second RS resource and the first RS resource belong to an RS resource corresponding to the same RS resource index, and the quasi co-location information of the second RS resource is different from the quasi co-location information of the first RS resource.

As an embodiment, the quasi co-location information of the first RS resource and the quasi co-location information of the second RS resource belong to configuration information of the first RS resource; or alternatively, the quasi co-location information of the second RS resource relies on the first index set.

### Embodiment 14

Embodiment 14 exemplifies a structural block diagram of a processing apparatus for use in a second node device, according to one embodiment of the present application; as shown in FIG. 14. In FIG. 14, the processing apparatus 1300 in the second node device includes a second transmitter 1301 and a second receiver 1302.

As an embodiment, the second node device is a base station device.

As one embodiment, the second node device is a user device.

As one embodiment, the second node device is a relay node device.

As one embodiment, the second transmitter 1301 includes at least one of {the antenna 420, the transmitter 418, the transmitting processor 416, the multi-antenna transmitting processor 471, the controller/processor 475, the memory 476} of Embodiment 4.

As one embodiment, the second receiver 1302 includes at least one of {the antenna 420, the receiver 418, the receiving processor 470, the multi-antenna receiving processor 472, the controller/processor 475, the memory 476} of Embodiment 4.

The second transmitter 1301 sends a first CSI reporting configuration; sends a first signaling.

The second receiver 1302 receives a first CSI.

In Embodiment 13, the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

As an embodiment, when and only when the first RS resource is not associated with the first index set, the calculation of the first report quantity is conditioned on the first RS resource.

As an embodiment, when the first RS resource is associated with the first index set, the value of the first report quantity is default.

As an embodiment, when the first RS resource is associated with the first index set, the calculation of the first report quantity is conditioned on a second RS resource; the second RS resource corresponds to the value of the first resource indicator.

As an embodiment, the first CSI reporting configuration is used to configure two RS resource sets for channel measurement, the first and second RS resources each belonging to the two RS resource sets for channel measurement.

As an embodiment, the second RS resource and the first RS resource belong to an RS resource corresponding to the same RS resource index, and the quasi co-location information of the second RS resource is different from the quasi co-location information of the first RS resource.

As an embodiment, the quasi co-location information of the first RS resource and the quasi co-location information of the second RS resource belong to configuration information of the first RS resource; or alternatively, the quasi co-location information of the second RS resource relies on the first index set.

Those of ordinary skill in the art may understand that all or part of the steps in the above described methods can be accomplished by instructing relevant hardware through a program that can be stored in computer-readable storage media, such as read only memory, hard disk, or optical disk. Optionally, the steps of the above embodiments, in whole or in part, may also be implemented using one or more integrated circuits. Accordingly, the various module units in the above embodiments may be implemented in the form of hardware or in the form of software function modules. The present application is not limited to the combination of software and hardware of any particular form. The user devices, terminals, and UEs in the present application include but are not limited to drones, communication modules on drones, remotely controlled aircrafts, aircrafts, small aircrafts, cell phones, tablets, notebooks, in-vehicle communications devices, wireless sensors, network cards, IoT terminals, RFID terminals, NB-IOT terminals, MTC (Machine Type Communication) terminals, eMTC (enhanced MTC) terminals, data cards, Internet cards, in-vehicle communications devices, low-cost mobile phones, low-cost tablet computers, and other wireless communication devices. The base stations or system devices in the present application include, but are not limited to, macrocellular base stations, microcellular base stations, home base stations, relay base stations, gNB NR node B, TRP (Transmitter Receiver Point), and other wireless communication devices.

The foregoing is merely a preferred embodiment of the present application and is not intended to limit the protective scope of the present application. Any changes and modifications made based on the embodiments described in the specification shall be deemed to be apparent and within the protective scope of the present invention if similar partial or all technical effects are obtained.

## Claims

1. A first node device for wireless communication, comprising:
a first receiver receiving a first CSI reporting configuration; receiving a first signaling;
a first transmitter sending a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

2. The first node device according to Claim 1, wherein when and only when the first RS resource is not associated with the first index set, the calculation of the first report quantity is conditioned on the first RS resource.

3. The first node device according to Claim 1 or 2, wherein when the first RS resource is associated with the first index set, the value of the first report quantity is default.

4. The first node device according to Claim 1 or 2, wherein when the first RS resource is associated with the first index set, the calculation of the first report quantity is conditioned on a second RS resource; the second RS resource corresponds to the value of the first resource indicator.

5. The first node device according to Claim 4, wherein the first CSI reporting configuration is used to configure two RS resource sets for channel measurement, the first and second RS resources belonging to the two RS resource sets for channel measurement, respectively.

6. The first node device according to Claim 4, wherein the second RS resource and the first RS resource belong to an RS resource corresponding to the same RS resource index, and the quasi co-location information of the second RS resource is different from the quasi co-location information of the first RS resource.

7. The first node device according to Claim 4 or 6, wherein the quasi co-location information of the first RS resource and the quasi co-location information of the second RS resource belong to configuration information of the first RS resource; or alternatively, the quasi co-location information of the second RS resource relies on the first index set.

8. A second node device for wireless communication, comprising:
a second transmitter, sending a first CSI reporting configuration; sending a first signaling;
a second receiver receiving a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

9. A method used in a first node for wireless communication, comprising:
receiving a first CSI reporting configuration; receiving a first signaling;
sending a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.

10. A method used in a second node for wireless communication, comprising:
sending a first CSI reporting configuration; sending a first signaling;
receiving a first CSI;
wherein the first CSI comprises a first resource indicator and a first report quantity; the value of the first resource indicator is one of N resource indicator values, and N is a positive integer greater than 1; the first CSI reporting configuration comprises a first resource configuration, the first resource configuration being used to configure the N RS resources, the N RS resources respectively corresponding to the N resource indicator values, the first RS resource corresponding to the value of the first resource indicator, and the first RS resource being one of the N RS resources; a protocol layer to which the first signaling belongs is a protocol layer under the RRC layer, and the first signaling is used to determine a first index set; whether calculation of the first report quantity is conditioned on the first RS resource depends on whether the first RS resource is associated with the first index set.
